(19) **Europäisches Patentamt**
**European Patent Office**
**Office européen des brevets**

(11) **EP 3 425 000 A1**

(12) **EUROPEAN PATENT APPLICATION**
published in accordance with Art. 153(4) EPC

(43) Date of publication:
**09.01.2019 Bulletin 2019/02**

(51) Int Cl.:
*C08L 23/06* (2006.01)   *C08K 5/09* (2006.01)
*C08K 5/101* (2006.01)   *C08L 23/02* (2006.01)
*C08L 67/04* (2006.01)

(21) Application number: **17759833.1**

(22) Date of filing: **24.02.2017**

(86) International application number:
**PCT/JP2017/007034**

(87) International publication number:
**WO 2017/150367 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 JP 2016037692**

(71) Applicants:
• **Setsunankasei Co., Ltd.**
**Izumi-shi, Osaka 594-1144 (JP)**
• **Nagase & Co., Ltd.**
**Osaka-shi**
**Osaka 550-8668 (JP)**

(72) Inventors:
• **HAMAGUCHI Kiyotaka**
**Izumi-shi**
**Osaka 594-1144 (JP)**
• **ARIDOME Norifumi**
**Izumi-shi**
**Osaka 594-1144 (JP)**
• **MORI Toyoichiro**
**Izumi-shi**
**Osaka 594-1144 (JP)**

(74) Representative: **Cabinet Plasseraud**
**66, rue de la Chaussée d'Antin**
**75440 Paris Cedex 09 (FR)**

(54) **RESIN COMPOSITION AND MOLDED ARTICLE USING RESIN COMPOSITION**

(57)    Provided is a resin composition including an ultra-high molecular weight polyethylene-based resin, which can be molded by a method similar to that for general-purpose polyethylene without impairing excellent characteristics derived from the ultra-high molecular weight polyethylene-based resin. The resin composition of the present invention includes: an ultra-high molecular weight polyethylene-based resin (A) having a viscosity-average molecular weight of 300,000 or more; and a condensed hydroxy fatty acid and/or an alcohol ester of the condensed hydroxy fatty acid (B). In one embodiment, the resin composition further includes a resin (C) other than the ultra-high molecular weight polyethylene-based resin (A), and the resin (C) is an olefin-based resin.

**Description**

Technical Field

The present invention relates to a resin composition and a molded article using the resin composition.

Background Art

Ultra-high molecular weight polyethylene has a molecular weight of, for example, 300,000 or more and is excellent in strength, abrasion resistance, lubricity, sanitary property, and the like. Therefore, the ultra-high molecular weight polyethylene has been widely used as materials for industrial components, such as a sliding material. However, the ultra-high molecular weight polyethylene has the following problem. The ultra-high molecular weight polyethylene has unsatisfactory moldability due to extremely large molecules thereof, and hence it is difficult to apply a molding method (for example, extrusion molding or injection molding), which is generally employed in general-purpose polyethylene, to the ultra-high molecular weight polyethylene.

As a method of improving the moldability of the ultra-high molecular weight polyethylene, there have been proposed a method involving adding a predetermined lubricant to a resin composition including ultra-high molecular weight polyethylene (Patent Literature 1), a method involving adding paraffin wax, a petroleum resin, or a higher alcohol to the resin composition (Patent Literature 2), a method involving adding low molecular weight polyethylene to the resin composition (Patent Literature 3), and the like. However, the excellent characteristics derived from the ultra-high molecular weight polyethylene and the moldability thereof have a trade-off relationship, and hence none of the above-mentioned methods has been able to improve the moldability while maintaining the excellent characteristics.

Citation List

Patent Literature

[PTL 1] JP 43-24525 B
[PTL 2] JP 57-193319 A
[PTL 3] JP 57-177036 A

Summary of Invention

Technical Problem

The present invention has been made to solve the above-mentioned problem, and an object of the present invention is to provide a resin composition including an ultra-high molecular weight polyethylene-based resin, which can be molded by a method similar to that for general-purpose polyethylene without impairing excellent characteristics derived from the ultra-high molecular weight polyethylene-based resin.

Solution to Problem

According to one aspect of the present invention, there is provided a resin composition, including: an ultra-high molecular weight polyethylene-based resin (A) having a viscosity-average molecular weight of 300,000 or more; and a condensed hydroxy fatty acid and/or an alcohol ester of the condensed hydroxy fatty acid (B) .

In one embodiment, the ultra-high molecular weight polyethylene-based resin (A) has a viscosity-average molecular weight of from 300,000 to 15,000,000.

In one embodiment, the resin composition further includes a resin (C) other than the ultra-high molecular weight polyethylene-based resin (A), and the resin (C) includes an olefin-based resin.

In one embodiment, a content of the ultra-high molecular weight polyethylene-based resin (A) is from 20 parts by weight to 95 parts by weight with respect to 100 parts by weight of the resins in the resin composition.

In one embodiment, a content of the condensed hydroxy fatty acid and/or the alcohol ester thereof (B) is from 0.1 part by weight to 30 parts by weight with respect to 100 parts by weight of the resins in the resin composition.

In one embodiment, the condensed hydroxy fatty acid has a condensation degree of 2 or more.

In one embodiment, the alcohol ester of the condensed hydroxy fatty acid includes a reaction product of a condensed hydroxy fatty acid having a condensation degree of 2 or more and an alcohol.

In one embodiment, a content of the resin (C) is more than 0 parts by weight and 80 parts by weight or less with respect to 100 parts by weight of the resins in the resin composition.

According to another aspect of the present invention, a molded article is provided. This molded article is formed through use of the above-mentioned resin composition.

Advantageous Effects of Invention

According to the present invention, the resin composition excellent in moldability without impairing the excellent characteristics derived from the ultra-high molecular weight polyethylene can be obtained by adding the condensed hydroxy fatty acid and/or the alcohol ester thereof to the resin composition including the ultra-high molecular weight polyethylene. The resin composition of the present invention can be satisfactorily molded by the method (for example, extrusion molding or injection molding) similar to that for general-purpose polyethylene. More specifically, the resin composition of the present invention has advantages, for example, in that shear peeling at a time of molding is prevented and a thin film can be formed at a time of forming of a sheet. Further, a molded article obtained from the resin composition of the present invention is excellent in mechanical characteristics, abrasion resistance, outer appearance, self-lubricating property, impact resistance, outer appearance, and the like.

Description of Embodiments

A. Resin Composition

A resin composition of the present invention includes an ultra-high molecular weight polyethylene-based resin (A) and a condensed hydroxy fatty acid and/or an alcohol ester of the condensed hydroxy fatty acid (B) (hereinafter sometimes simply referred to as "compound (B)"). In one embodiment, the resin composition may include a resin (C) other than the ultra-high molecular weight polyethylene-based resin (A) (hereinafter sometimes simply referred to as "resin (C)").

According to the present invention, as described above, it is possible to obtain a resin composition excellent in moldability without impairing the excellent characteristics derived from the ultra-high molecular weight polyethylene by adding the condensed hydroxy fatty acid and/or the alcohol ester thereof. The superiority or inferiority of moldability can be evaluated, for example, based on the melt flow rate of the resin composition. The melt flow rate at 190°C and 21.6 kgf of the resin composition of the present invention is preferably 1 g/10 min or more, more preferably 3 g/10 min or more, still more preferably 5 g/10 min or more, particularly preferably 8 g/10 min or more. The upper limit of the melt flow rate is, for example, 100 g/10 min. The melt flow rate can be measured by a method pursuant to JIS K 7210.

A-1. Ultra-high Molecular Weight Polyethylene-based Resin (A)

The ultra-high molecular weight polyethylene-based resin (A) has a viscosity-average molecular weight of 300,000 or more. When a polyethylene-based resin having such a high molecular weight is used, it is possible to obtain a resin composition capable of being formed into a molded article excellent in abrasion resistance, self-lubricating property, impact resistance, low-temperature characteristics, chemical resistance, and the like. The viscosity-average molecular weight of the ultra-high molecular weight polyethylene-based resin (A) is preferably from 300,000 to 15,000,000, more preferably from 500,000 to 8,000,000, still more preferably from 1,000,000 to 6,000,000. When the viscosity-average molecular weight falls within such range, a resin composition capable of being formed into a molded article excellent in the above-mentioned characteristics with satisfactory moldability can be obtained. The resin composition of the present invention may include two or more kinds of the ultra-high molecular weight polyethylene-based resins (A) having different molecular weights. The viscosity-average molecular weight (Mv) can be measured by viscometry stipulated in ASTM D4020. Specifically, the viscosity-average molecular weight (Mv) can be determined through use of the following expression (1) by measuring a limiting viscosity ($\eta$ (dl/g)) based on the viscometry stipulated in ASTM D4020.

$$Mv = 5.37 \times 10^4 \eta^{1.37} \qquad \cdots (1)$$

The limiting viscosity of the ultra-high molecular weight polyethylene-based resin (A) is, for example, 3.5 dl/g or more. The upper limit of the limiting viscosity of the ultra-high molecular weight polyethylene-based resin (A) is, for example, 60 dl/g or less.

The ultra-high molecular weight polyethylene-based resin (A) is a resin obtained by polymerizing a monomer composition containing ethylene as a main component (monomer composition in which the content of ethylene is largest among all the monomers). The ultra-high molecular weight polyethylene-based resin (A) may be a homopolymer of ethylene, or may be a copolymer of ethylene and another monomer that can be copolymerized with the ethylene. In the ultra-high molecular weight polyethylene-based resin (A), the content of a constituent unit derived from ethylene is preferably 80 mol% or more, more preferably 90 mol% or more, still more preferably 95 mol% or more.

As the other monomer that can be copolymerized with ethylene, there is given, for example, an $\alpha$-olefin having 3 or more carbon atoms (preferably 3 to 20 carbon atoms). Examples of the $\alpha$-olefin having 3 or more carbon atoms include propylene, 1-butene, isobutene, 1-pentene, 2-methyl-1-butene, 3-methyl-1-butene, 1-hexene, 3-methyl-1-pentene, 4-methyl-1-pentene, 1-heptene, 1-octene, 1-decene, 1-dodecene, 1-tetradecene, 1-hexadecene, 1-octadecene, and 1-icosene.

The ultra-high molecular weight polyethylene-based resin (A) may be produced by any appropriate method. The ultra-high molecular weight polyethylene-based resin (A) can be obtained, for example, by polymerizing the above-mentioned monomer in the presence of any appropriate catalyst by a method described in JP 58-83006 A.

In one embodiment, as described above, the resin composition of the present invention further includes the resin (C) other than the ultra-high molecular weight polyethylene-based resin (A). In this case, the content of the ultra-high molecular weight polyethylene-based resin (A) is preferably from 20 parts by weight to 95 parts by weight, more preferably from 30 parts by weight to 85 parts by weight, still more preferably from 40 parts by weight to 80 parts by weight with respect to 100 parts by weight of the resins in the resin composition (that is, a total amount of 100 parts by weight of the resin (A) and the resin (C)). When the content of the ultra-high molecular weight polyethylene-based resin (A) falls within such range, a resin composition particularly excellent in processability can be obtained.

In another embodiment, the resin composition of the present invention includes only the ultra-high molecular weight polyethylene-based resin (A) as a resin component.

A-2. Condensed Hydroxy Fatty Acid and/or Alcohol Ester of the condensed hydroxy fatty acid (B)

In the present invention, through incorporation of the condensed hydroxy fatty acid and/or the alcohol ester of the condensed hydroxy fatty acid (B), it is possible to obtain a resin composition capableof beingprocessedby a molding method (for example, extrusion molding or injection molding) similar to that for a general-purpose polyethylene-based resin, even when the resin composition includes the ultra-high molecular weight polyethylene-based resin (A) as a resin component.

The condensed hydroxy fatty acid can be obtained by subjecting a hydroxy fatty acid to dehydration condensation. The condensed hydroxy fatty acid can be obtained, for example, by adding an alkali catalyst, such as caustic soda, to a hydroxy fatty acid and removing reaction water under heating, to thereby subject the hydroxy fatty acid to dehydration condensation.

The condensed hydroxy fatty acid is a condensate of a hydroxy fatty acid, and the condensation degree thereof is preferably 2 or more, more preferably 4 or more. The upper limit of the condensation degree of the condensed hydroxy fatty acid is, for example, 20. The condensation degree can be determined by calculation based on an acid value of a hydroxy fatty acid as a raw material and an acid value of the hydroxy fatty acid after a condensation reaction.

The hydroxy fatty acid is a fatty acid having one or more hydroxyl groups in a molecule thereof. Specific examples of the hydroxy fatty acid include ricinoleic acid, 12-hydroxystearic acid, sabinic acid, 2-hydroxytetradecanoic acid, ipurolic acid, 2-hydroxyhexadecanoic acid, jalapinolic acid, juniperic acid, ambrettolic acid, aleuritic acid, 2-hydroxyoctadecanoic acid, 18-hydroxyoctadecanoic acid, 9,10-dihydroxyoctadecanoic acid, kamlolenic acid, ferron acid, and cerebronic acid. The hydroxy fatty acids may be used alone or in combination thereof.

The alcohol ester of the condensed hydroxy fatty acid may be obtained by subjecting the condensed hydroxy fatty acid and an alcohol to an esterification reaction. The alcohol ester of the condensed hydroxy fatty acid can be obtained, for example, by mixing the condensed hydroxy fatty acid and an alcohol with each other, adding an alkali catalyst, such as caustic soda, or an acid catalyst, such as phosphoric acid, to the obtained mixture, and removing reaction water under heating. The degree of progress of esterification in this reaction can be confirmed by measuring an acid value, a saponification value, a hydroxyl group value, or the like. Also in the condensed hydroxy fatty acid used herein, the condensation degree is preferably 2 or more, more preferably 4 or more as described above.

Examples of the alcohol include: monohydric alcohols, such as methyl alcohol, ethyl alcohol, and isopropyl alcohol; and dihydric alcohols, such as ethylene glycol and propylene glycol. A polyhydric alcohol may also be used as the alcohol. Examples of the polyhydric alcohol include: alkane polyols, such as pentaerythritol and glycerin; polyalkane polyols serving as polymers of the alkane polyol; sugars, such as sucrose; and sugar derivatives typified by sugar alcohols, such as sorbitol and mannitol. Those alcohols may be used alone or in combination thereof.

Specific examples of the condensed hydroxy fatty acid and/or the alcohol ester of the condensed hydroxy fatty acid (B) synthesized by using the above-mentioned compound as a raw material include: condensed ricinoleic acid obtained by dehydration condensation of ricinoleic acid; condensed 12-hydroxystearic acid obtained by dehydration condensation of 12-hydroxystearic acid; condensed ricinoleic acid hexaglycerin ester serving as an ester of condensed ricinoleic acid and hexaglycerin serving as a glycerin hexamer; condensed ricinoleic acid tetraglycerin ester serving as an ester of condensed ricinoleic acid and tetraglycerin serving as a glycerin tetramer; condensed 12-hydroxystearic acid propylene glycol ester serving as an ester of condensed 12-hydroxystearic acid and propylene glycol; and condensed linoleic acid propylene glycol ester serving as an ester of condensed linoleic acid and propylene glycol. Those compounds maybe used alone or in combination thereof.

The content of the condensed hydroxy fatty acid and/or the alcohol ester thereof (B) is preferably from 0.1 part by weight to 30 parts by weight, more preferably from 0.1 part by weight to 20 parts by weight, still more preferably from 0.1 part by weight to 10 parts by weight, yet still more preferably from 0.5 part by weight to 10 parts by weight, particularly preferably from 0.5 part by weight to 8 parts by weight, most preferably from 0.6 part by weight to 6 parts by weight with respect to 100 parts by weight of the resins in the resin composition. When the content of the condensed hydroxy fatty acid and/or the alcohol ester of the condensed hydroxy fatty acid (B) falls within such range, it is possible to obtain a resin composition capable of being formed into a molded article particularly excellent in characteristics, such as abrasion resistance, a self-lubricating property, impact resistance, low-temperature characteristics, and chemical resistance, with satisfactory processability. The "content of the condensed hydroxy fatty acid and/or the alcohol ester of the condensed hydroxy fatty acid (B)" means the total content of the condensed hydroxy fatty acid and the alcohol ester of the condensed hydroxy fatty acid. Thus, when the resin composition includes only the condensed hydroxy fatty acid as the compound (B), the "content of the condensed hydroxy fatty acid and/or the alcohol ester of the condensed hydroxy fatty acid (B)" means the content of the condensed hydroxy fatty acid. Further, when the resin composition includes only the alcohol ester of the condensed hydroxy fatty acid as the compound (B), the "content of the condensed hydroxy fatty acid and/or the alcohol ester of the condensed hydroxy fatty acid (B) " means the content of the alcohol ester of the condensed hydroxy fatty acid.

A-3. Resin (C)

In one embodiment, as described above, the resin composition of the present invention includes the resin (C) other than the ultra-high molecular weight polyethylene-based resin (A). As the resin (C), there are given, for example, olefin-based resins (for example, a homopolymer of an $\alpha$-olefin and a copolymer formed of two or more kinds of $\alpha$-olefins). Two or more kinds of resins may be combined to be used as the resin (C).

The $\alpha$-olefin constituting the resin (C) is preferably an $\alpha$-olefin having 2 to 10 carbon atoms, more preferably an $\alpha$-olefin having 2 to 8 carbon atoms, still more preferably ethylene, propylene, or 1-butene.

In one embodiment, a polyethylene-based resin other than the ultra-high molecular weight polyethylene-based resin (A) is used as the resin (C). In the polyethylene-based resin, the content of a constituent unit derived from ethylene is preferably 80 mol% or more, more preferably 90 mol% or more, still more preferably 95 mol% or more.

When the resin (C) is a polyethylene-based resin, the viscosity-average molecular weight thereof is, for example, 200,000 or less. Through incorporation of the resin (C) having a relatively low molecular weight, the moldability of the resin composition is further improved.

The melt flow rate at 190°C and 2.16 kgf of the polyethylene-based resin used as the resin (C) is preferably from 0.01 g/10 min to 150 g/min, more preferably from 0.1 g/10 min to 100 g/min, still more preferably from 10 g/10 min to 90 g/min, particularly preferably from 20 g/10 min to 80 g/min. When the melt flow rate of the polyethylene-based resin falls within such range, it is possible to obtain a resin composition which is particularly excellent in moldability and in which the characteristics derived from the ultra-high molecular weight polyethylene-based resin (A) are sufficiently exhibited.

In one embodiment, a propylene-based resin is used as the resin (C). The propylene-based resin is preferred from the viewpoint of satisfactory compatibility with the ultra-high molecular weight polyethylene-based resin (A). As the propylene-based resin, there are given a homopolymer of propylene, random polypropylene formed of propylene and ethylene, block polypropylene formed of propylene and ethylene, a polypropylene terpolymer formed of propylene, ethylene, and 1-butene, syndiotactic polypropylene, atactic polypropylene, long-chain branching polypropylene, and the like. Those resins may be used alone or in combination thereof. The content of a constituent unit derived from propylene in the propylene-based resin is preferably 50 mol% or more, more preferably 80 mol% or more, still more preferably 90 mol% or more, yet still more preferably 95 mol% or more.

The melt flow rate at 230°C and 2.16 kgf of the propylene-based resin used as the resin (C) is preferably from 0.1 g/10 min to 100 g/min, more preferably from 0.5 g/10 min to 80 g/min, still more preferably from 1 g/10 min to 50 g/min. When the melt flow rate of the propylene-based resin falls within such range, it is possible to obtain a resin composition which is particularly excellent in moldability and in which the characteristics derived from the ultra-high molecular weight polyethylene-based resin (A) are sufficiently exhibited.

The content of the resin (C) is preferably more than 0 parts by weight and 80 parts by weight or less, more preferably from 5 parts by weight to 60 parts by weight, still more preferably from 10 parts by weight to 50 parts by weight with respect to 100 parts by weight of the resins in the resin composition. When the content of the resin (C) falls within such range, it is possible to obtain a resin composition which is particularly excellent in moldability and in which the characteristics derived from the ultra-high molecular weight polyethylene-based resin (A) are sufficiently exhibited.

A-4. Other Component

The resin composition of the present invention may further include any appropriate additive as required. Examples of the additive include: stabilizers, such as a fluidity modifier, an anti-build up agent, a heat stabilizer, and a weathering agent; colorants, such as a pigment and a dye; a lubricant; a cross-linking agent; a cross-linking aid; an antiblocking agent; an antistatic agent; an anti-fog agent; an organic filler; and an inorganic filler.

Examples of the fluidity modifier include various silicone oils, such as polydimethylsiloxane, a liquid lubricant, various aliphatic compounds or metal salts thereof, an alicyclic compound, various waxes, a solid lubricant, and various surfactants, and mixtures thereof. In one embodiment, a fatty acid amide (preferably erucamide) is used as the fluidity modifier. The content of the fatty acid amide is, for example, from 0.05 part by weight to 1 part by weight with respect to 100 parts by weight of the resins in the resin composition. When the fatty acid amide is added as described above, the fluidity of the resin composition is modified, and the thin film moldability of a film by the resin composition is improved.

Examples of the silicone oils include dimethyl polysiloxane type, methyl hydrogen polysiloxane type, both-terminal hydrogen polysiloxane type, methyl phenyl polysiloxane type, alkyl-modified silicone type, amino-modified silicone type, carboxyl-modified silicone type, higher fatty acid-modified silicone type, epoxy-modifiedsilicone type, vinyl group-containing silicone type, alcohol-modified silicone type, polyether-modified silicone type, alkyl polyether-modified silicone type, and fluorine-modified silicone type silicone oils.

Examples of the liquid lubricant include: synthesized lubricating oils, such as a polyglycol oil, a polyphenyl ether oil, an ester oil, a phosphate oil, a polychlorotrifluoroethylene oil, a fluoroester oil, a chlorinated biphenyl oil, and a silicone oil; and an ethylene-$\alpha$-olefin copolymer synthesized lubricating oil.

Examples of the aliphatic compounds include: fatty acids, such as capric acid, lauric acid, myristic acid, palmitic acid, stearic acid, and oleic acid; fatty acid amides, such as ethylenebisstearamide, stearic acid amide, oleamide, erucamide, ethylenebisoleamide, capramide, lauramide, palmitamide, stearylamide, behenamide, hydroxystearamide, N-oleyl palmitamide, N-stearyl stearamide, N-stearyl oleamide, N-oleyl stearamide, N-stearyl erucamide, methylol stearamide, methylenebisstearamide, ethylenebiscapramide, ethylenebislauramide, ethylenebishydroxystearamide, ethylenebisbehenamide, hexamethylenebisstearamide, hexamethylenebisbehenamide, hexamethylene hydroxystearamide, N,N'-distearyl adipamide, N,N'-distearyl sebacamide, ethylenebiserucamide, hexamethylenebisoleamide, N,N'-dioleyl adipamide, and N,N'-dioleyl sebacamide; ether compounds of fatty acids, such as dioctyl ether $\{(C_8H_{17})_2O\}$, didecyl ether $\{(C_{10}H_{25})_2O\}$, didodecyl ether $\{(C_{12}H_{25})_2O\}$, and dioctadecyl ether $\{(C_{18}H_{37})_2O\}$; ketone compounds of fatty acids, such as methyl tetradecyl ketone $\{CH_3CO(CH_2)_{13}CH_3\}$, n-propyl hexadecyl ketone $\{CH_3(CH_2)_2CO(CH_2)_{15}CH_3\}$, didodecyl ketone $\{CH_3(CH_2)_{11}CO(CH_2)_{11}CH_3\}$, and dioctadecyl ketone $\{CH_3(CH_2)_{17}CO(CH_2)_{17}CH_3\}$; ester compounds of fatty acids, such as octyl laurate $\{CH_3(CH_2)_{10}COO(CH_2)_7CH_3\}$, ethyl palmitate $\{CH_3(CH_2)_{14}COOCH_2CH_3\}$, butyl stearate $\{CH_3(CH_2)_{16}COO(CH_2)_3CH_3\}$, and octyl stearate $\{CH_3(CH_2)_{16}COO(CH_2)_7CH_3\}$; and aliphatic alcohols, such as lauryl alcohol, myristyl alcohol, cetyl alcohol $(CH_3(CH_2)_{14}CH_2OH)$, heptadecyl alcohol $(CH_3(CH_2)_{15}CH_2OH)$, stearyl alcohol $(CH_3(CH_2)_{16}CH_2OH)$, ceryl alcohol $(CH_3(CH_2)_{24}CH_2OH)$, and behenyl alcohol $(CH_3(CH_2)_7C(CH)_{11}CHOH)$.

Examples of the fatty acid metal salts include calcium stearate, magnesium stearate, barium stearate, lithium stearate, sodium stearate, zinc stearate, zinc laurate, zinc behenate, calcium montanate, magnesium montanate, barium montanate, lithium montanate, sodium montanate, zinc montanate, calcium behenate, magnesium behenate, barium behenate, lithium behenate, sodium behenate, zinc behenate, calcium laurate, magnesium laurate, barium laurate, lithium laurate, sodium laurate, zinc laurate, calcium 12-hydroxystearate, magnesium 12-hydroxystearate, barium 12-hydroxystearate, lithium 12-hydroxystearate, and sodium 12-hydroxystearate.

Examples of the alicyclic compound include an esterified rosin, a cyclic terpene resin, a terpene resin derivative, and a polycyclopentadiene-based resin or a dicyclopentadiene-based petroleum resin obtained by polymerization of polycyclopentadiene, hydrogenated polycyclopentadiene, or dicyclopentadiene serving as a main component through addition of 1,3-pentadiene, a conjugated diolefin, or the like.

Examples of the waxes include: an n-alkane having 22 or more carbon atoms, such as n-nonane, n-decane, n-undecane, n-dodecane, n-tetradecane, n-octadecane, docosane, tricosane, tetracosane, or triacontane, or a mixture with a lower n-alkane containing any such component as a main component; a so-called paraffin wax separated and purified from petroleum, ethylene or an intermediate or lower polyethylene wax that is a low-molecular-weight polymer obtained by copolymerizing ethylene and another $\alpha$-olefin, a high-pressure-produced polyethylene wax, an ethylene copolymer wax, or a wax obtained by decreasing the molecular weight of polyethylene, such as intermediate and low-pressure-produced polyethylene or high-pressure-produced polyethylene, by thermal degradation or the like, and an oxide of any such wax or the oxidized wax modified with, for example, maleic acid; a wax modified with maleic acid; a montanoic acid ester-based wax; and a wax of a fatty acid derivative (example: a dicarboxylic acid ester, a glycerin fatty acid ester, or an amide wax).

Examples of the solid lubricant include graphite, molybdenum disulfide, boron nitride, tungsten disulfide, lead oxide, glass powder, and a metal soap.

Examples of the surfactants include glycerin monostearate, hardened palm oil monoglyceride, oleic acid monoglyceride, a hardened rapeseed oil fatty acid mono/diglyceride, self-emulsifying stearic acid mono/diglyceride, oleic acid mono/diglyceride, caprylic acid monoglyceride, lauric acid monoglyceride, capric acid monoglyceride, caprylic acid mono/diglyceride, caprylic acid diglyceride, diglycerin mono/dioleate, diglycerin mono/distearate, diglycerin monostearate, decaglycerin pentaoleate, decaglycerin pentastearate, decaglycerin pentastearate, decaglycerin decaoleate, decaglycerin decastearate, pentaglycerin trioleate, pentaglycerin hexastearate, decaglycerin monolaurate, decaglycerin monomyristate, decaglycerin monooleate, decaglycerin monostearate, decaglycerin distearate, pentaglycerin monolaurate, pentaglycerin monomyristate, pentaglycerin monooleate, pentaglycerin monostearate, sorbitan monostearate, sorbitan monooleate, sorbitan trioleate, propylene glycol monostearate, and propylene glycol monooleate.

Examples of the anti-build up agent include a fluorine-based elastomer, a 12-hydroxystearic acid metal salt, a basic 12-hydroxystearic acid metal salt, and a carboxylic acid amide-based wax.

Examples of the antistatic agent include a low-molecular-weight surfactant type antistatic agent and a high-molecular-weight type antistatic agent. Examples of the low-molecular-weight surfactant type antistatic agent include: a quaternary ammonium salt; a pyridinium salt; a cationic antistatic agent having a cationic group, such as a primary, secondary, or tertiary amino group; an anionic antistatic agent having an anionic group, such as a sulfonic acid base, a sulfate base, a phosphate base, or a sulfonic acid base; an amphoteric antistatic agent, such as an amino acid antistatic agent or an amino sulfate antistatic agent; and a nonionic antistatic agent, such as an amino alcohol antistatic agent, a glycerin antistatic agent, or a polyethylene glycol antistatic agent. Examples of the high-molecular-weight type antistatic agent include: non-ionic high-molecular-weight antistatic agents, such as polyethylene oxide, polypropylene oxide, polyethylene glycol, polyether ester amide, polyether ester, polyether polyolefin, and an ethylene oxide-epichlorohydrin-based copolymer; anionic high-molecular-weight antistatic agents, such as polystyrene sulfonic acid; and cationic high-molecular-weight antistatic agents, such as a quaternary ammonium base-containing acrylate polymer, a quaternary ammonium base-containing styrene polymer, and a quaternary ammonium base-containing polyethylene glycol methacrylate-based copolymer.

Further, from the viewpoint of imparting an antistatic function, a conductive substance can be used. Examples of the conductive substance include a metal, a metal oxide, particles each coated with a metal or a metal oxide, an inorganic metal salt compound, a carbon-based material, a modified silicone material, an ionic organic compound, a non-ionic organic compound, a conductive polymer, and an ionic liquid. Examples of the metal include gold, silver, platinum, copper, nickel, iron, palladium, aluminum, gallium, indium, and tin. Examples of the metal oxide include zinc oxide, antimony oxide, tin oxide, cerium oxide, indium oxide, indium tin oxide (ITO), a metal-doped tin oxide, and a metal-doped zinc oxide. An example of the metal-doped tin oxide is antimony-doped tin oxide (ATO). Examples of the inorganic metal salt compound include a metal silicate, a metal titanate, an alkali metal sulfate, an alkali metal nitrate, an alkali metal perchlorate, an alkali metal sulfonate, an alkali metal carboxylate, a metal complex of tetrafluoroboric acid, and a metal complex of hexafluorophosphoric acid. Examples of the carbon-based material include carbon black, graphite, a carbon fiber, a carbon nanotube, a fullerene, and graphene. A conductivity-imparting agent is, for example, a conductive filler. Examples of the conductive filler include carbon-based, metal-based, metal oxide-based, and metal-coated conductive fillers. Examples of the carbon-based conductive filler include Ketjen black, acetylene black, and oil furnace black. Examples of a metal for forming the metal-based conductive filler include Ag, Ni, Cu, Zn, Al, and stainless steel. Examples of a metal oxide for forming the metal oxide-based conductive filler include $SnO_2$, $In_2O_3$, and ZnO. A filler using, for example, Ni or Al as a coating material, and using, for example, mica, glass beads, glass fibers, carbon fibers, calcium carbonate, zinc oxide, or titanium oxide as a base filler is adopted as the metal-coated conductive filler.

In one embodiment, the carbon-based conductive filler (preferably Ketjen black) is used. The content of the carbon-based conductive filler is, for example, from 2 parts by weight to 20 parts by weight with respect to 100 parts by weight of the resins in the resin composition. When the carbon-based conductive filler is added as described above, it is possible to obtain a resin composition capable of being formed into a molded article having a surface specific resistance value (for example, $10^3 \; \Omega/\square$ to $10^5 \; \Omega/\square$) set appropriately.

Examples of the colorants include: organic pigments, such as perylene red (C.I. Pigment Red 178), quinacridone red (C.I. Pigment Red 122, 202), anthraquinone yellow (C.I. Pigment Yellow 147), benzimidazolone yellow (C.I. Pigment Yellow 180, 181), monoazo lake yellow (C.I. Pigment Yellow 183), copper phthalocyanine blue (C.I. Pigment Blue 15-1), and copper phthalocyanine green (C.I. Pigment Green 7); and inorganic pigments, such as titanium dioxide (C.I. Pigment White 6), zinc sulfide (C.I. Pigment White 22), carbon black (C.I. Pigment Black 7), sintered black (C.I. Pigment Black 28), bismuth vanadate yellow (C.I. Pigment Yellow 184), nickel-titanium yellow (C.I. Pigment Yellow 53), chromium titanium yellow (C.I. Pigment Brown 24), red oxide (C.I. Pigment Red 101), chromium oxide (C.I. Pigment Green 17), cobalt green (C.I. Pigment Green 19), ultramarine (C.I. Pigment Blue 29), cobalt blue (C.I. Pigment Blue 28), ultramarine violet (C.I. Pigment Violet 15), and aluminum (C.I. Pigment Metal 1).

A-5. Production Method for Resin Composition

The resin composition of the present invention may be produced by any appropriate method. As the production method, there is given, for example, a method (melt blending method) involving melting and kneading the ultra-high molecular weight polyethylene-based resin (A), the condensed hydroxy fatty acid and/or the alcohol ester of the condensed hydroxy fatty acid (B), and the resin (C) to be added as required. As the melting and kneading method, there are given, for example, methods using a single-screw extruder, a multi-screw extruder, a tandem extruder, and a Banbury mixer. When the above-mentioned resins are melted and kneaded in the presence of the condensed hydroxy fatty acid and/or the alcohol ester of the condensed hydroxy fatty acid (B), the occurrence of a massive substance can be suppressed, and a resin composition having a satisfactory resin dispersion state can be obtained.
It is preferred that the processing temperature in the above-mentioned melting and kneading be a temperature at which the resins included in the resin composition can be melted. The temperature is, for example, from 150°C to 330°C.

B. Molded Article

According to the present invention, a molded article formed through use of the above-mentioned resin composition may be provided. Examples of the method of molding the molded article include an injection molding method, an injection compression molding method, a profile extrusion molding method, a foaming molding method, a ram extrusion molding method, a solidification extrusion method, a pipe molding method, a tube molding method, a molding method involving coating various molded articles, an injection blow molding method, a direct blow molding method, a T-die sheet or film molding method, a stretching molding method, an inflation molding method, a calender molding method, a press molding method, a rotation molding method, a vacuum molding method, a compressed air molding method, and melt spinning.
The molded article may be molded into, for example, a sheet shape, a film shape, a bar shape, a tube shape, a lump shape, or a deformed shape in accordance with the application. As the form of the molded article, there are given, for example, a container, a freezing bag, a blow-molded bottle, a tray, a packaging material, a tape, and a lid member. Further, the molded article can also be used as a covering material.
The molded article has the characteristics (excellent mechanical characteristics, excellent impact resistance, excellent abrasion resistance, an excellent self-lubricating property, and the like) derived from the ultra-high molecular weight polyethylene-based resin, and is also excellent in outer appearance by virtue of molding easiness of the resin composition.

Examples

Now, the present invention is specifically described by way of Examples, but the present invention is by no means limited by these examples . Evaluation methods in Examples are as described below. "Parts" and "%" are based on a weight unless otherwise stated.

(1) Fluidity

The obtained resin composition was evaluated for fluidity by measuring a melt flow rate (MFR) through use of "L268" manufactured by Tateyama Kagaku Industry Co., Ltd. pursuant to JIS K 7210. The test conditions in the MFR test of the resin composition were set to a temperature of 190°C and a load of 21.6 kgf.

(2) Extrusion Moldability

The resin composition was evaluated for extrusion moldability through use of a 40 mmφ single-screw extruder (manufactured by GSI Creos Corporation, product name: "691C-EF049", extrusion temperature : 250°C). In Table 1 and Table 2, a case in which extrusion molding was performed satisfactorily is defined as "○", and a case in which a defect occurred in extrusion molding (case in which the resin composition was not able to be discharged) is defined as "×".

(3) Impact Strength

The resin composition was subjected to compression molding pursuant to JIS K 6936-2 to produce an evaluation sample. The evaluation sample was evaluated for Charpy impact characteristics through use of "DG-CB" manufactured by Toyo Seiki Seisaku-sho, Ltd. pursuant to JIS K 7111. The shape and measurement conditions of the evaluation sample were set as described below. In Table 1, a case in which the evaluation sample was not broken in the test is defined as "Non breakage" . Further, when the evaluation sample was broken, the Charpy impact strength of the evaluation sample is described in Table 1.

(Evaluation Sample)

•Sample with a notch

Length l: 80.0±0.2 cm
Width b: 10.0±0.2 cm
Thickness h: 4.0±0.2 cm
Remaining width bn after notch: 8.0±0.2 cm
Notch: Shape A (notch distal end radius $r_N$; 0.25±0.05 mm)

(Measurement Conditions)

Pendulum energy: 4 J
Impact speed: 2.9 m/s (±5%)

(4) Abrasion Resistance (Abrasion Amount)

A mixed solution obtained by mixing the same amounts of water and abrasive grains (silica sand having a particle diameter of from 200 μm to 1,000 μm) was loaded into a stirring tank equipped with a stirring blade.
The mixed solution was subjected to compression molding (JIS K 6936-2) to obtain an evaluation sample having a width of 100 mm, a length of 100 mm, and a thickness of 4 mm.
The evaluation sample was applied to the stirring blade so that a surface defined by the width and length of the evaluation sample was parallel to a rotation shaft of the stirring blade.
After that, the stirring blade was rotated 60,000 times at a rotation speed of 500 rpm.
A difference between the weight of the evaluation sample before the test and the weight of the evaluation sample after the test was defined as an abrasion amount.

[Example 1]

60 parts by weight of an ultra-high molecular weight polyethylene-based resin (A1) described below serving as the ultra-high molecular weight polyethylene-based resin (A), 40 parts by weight of a polyethylene resin (C1) described below serving as the resin (C), and 2 parts by weight of an alcohol ester (B1) of a condensed hydroxy fatty acid described below serving as the compound (B) were melted and kneaded with a twin-screw extruder (manufactured by Toshiba Machine Co., Ltd., product name: "TEM37SS") to obtain a resin composition. The obtained resin composition was subjected to the above-mentioned evaluations (1) to (4). The results are shown in Table 1.
Ultra-high molecular weight polyethylene-based resin (A1): manufactured by Asahi Kasei Chemicals Corporation, product name: "Sunfine UH970", viscosity-average molecular weight: 5,900,000
Polyethylene resin (C1) : manufactured by Asahi Kasei Chemicals Corporation, product name: "Suntec J300", MFR (190°C/2.16 kgf): 40 g/10 min
Alcohol ester of condensed hydroxy fatty acid (B1) : condensed tetraglycerin ricinoleate (condensation degree of hydroxy fatty acid: 10)

[Examples 2 to 20 and Comparative Examples 1 to 14]

Resin compositions were obtained in the same manner as in Example 1 except that ultra-high molecular weight polyethylene-based resins (A2 to A6), polyethylene resins (C2 to C6), a polypropylene resin/polyethylene resin mixture (C7), compounds (B2 and B3), and compounds (d1 to d4) shown in Table 1 were used in blending amounts shown in Table 1. Each of the obtained resin compositions was subjected to the above-mentioned evaluations (1) to (4). The results are shown in Table 1.

(Ultra-high Molecular Weight Polyethylene-based Resin (A))

A2: manufactured by Asahi Kasei Chemicals Corporation, product name: "Sunfine UH950", viscosity-average molecular weight: 4,500,000

A3: manufactured by Asahi Kasei Chemicals Corporation, product name: "Sunfine UH900", viscosity-average molecular weight: 3,300,000

A4: manufactured by Asahi Kasei Chemicals Corporation, product name: "Sunfine UH850", viscosity-average molecular weight: 2,000,000

A5: manufactured by Asahi Kasei Chemicals Corporation, product name: "Sunfine UH650", viscosity-average molecular weight: 1,000,000

A6: manufactured by Celanese Corporation, product name: "GUR 5113", viscosity-average molecular weight: 500,000

(Resin (C))

C2: polyethylene resin, manufactured by Tosoh Corporation, product name: "Nipolon Hard 4020", MFR (190°C/2.16 kgf): 5.4 g/10 min

C3: polyethylene resin, manufactured by Tosoh Corporation, product name: "Nipolon Hard 7300A", MFR (190°C/2.16 kgf): 0.05 g/10 min

C4: polyethylene resin, manufactured by Prime Polymer Co., Ltd., product name: "Evolue-H SP50800P", MFR (190°C/2.16 kgf): 135 g/10 min

C5: polyethylene resin, manufactured by Tosoh Corporation, product name: "Petrocene 203", MFR (190°C/2.16 kgf) : 8 g/10 min, 12.5 parts by weight, and polyethylene resin, manufactured by Asahi Kasei Chemicals Corporation, product name: "Suntec J300", MFR (190°C/2.16 kgf): 40 g/10 min, 87.5 parts by weight

C6: polyethylene resin, manufactured by Sumitomo Chemical Company, Limited, product name: "EXCELLEN FX558", MFR (190°C/2.16 kgf): 75 g/10 min, 50 parts by weight, and polyethylene resin, manufactured by Asahi Kasei Chemicals Corporation, product name: "Suntec J300", MFR (190°C/2.16 kgf): 40 g/10 min, 50 parts by weight

C7: polypropylene resin, manufactured by Japan Polypropylene Corporation, product name: "NOVATEC BC2E", MFR (230°C/2.16 kgf): 16 g/10 min, 50 parts by weight, and polyethylene resin, manufactured by Prime Polymer Co., Ltd., product name: "NEO-ZEX45200", MFR (190°C/2.16 kgf): 20 g/10 min, 50 parts by weight

(Compound (B))

B2: condensed ricinoleic acid propylene glycol ester (condensation degree of hydroxy fatty acid: 4)

B3: condensed 12-hydroxystearic acid (condensation degree of hydroxy fatty acid: 4)

(Compound (d))

d1: oleic acid glycerin ester

d2: ricinoleic acid glycerin ester

d3: oleic acid propylene glycol ester

d4: stearic acid hexaglycerin ester

Table 1

| | Ultra-high molecular weight polyethylene-based resin (A) | | | Resin (C) (Polyolefin resin) | | | Compound (B) Compound (d) | | Fluidity (MFR) (g/ 10 min) | Impact strength (kJ/m$^2$) | Abrasion amount (mg) | Extrusion moldability |
|---|---|---|---|---|---|---|---|---|---|---|---|---|
| | | Molecular weight (ten thousand) | Addition amount (parts by weight) | | MFR (g/10 min) | Addition amount (parts by weight) | | Addition amount (parts by weight) | | | | |
| Example 1 | A1 | 590 | 60 | C1 | 40 | 40 | B1 | 2 | 13.6 | Non breakage | 4 | ○ |
| Example 2 | A2 | 450 | 75 | C1 | 40 | 25 | B1 | 4 | 2.5 | Non breakage | 3.1 | ○ |
| Example 3 | A3 | 330 | 80 | C1 | 40 | 20 | B1 | 2.7 | 1.9 | Non breakage | 2.9 | ○ |
| Example 4 | A3 | 330 | 75 | C1 | 40 | 25 | B1 | 4 | 3.3 | Non breakage | 4.2 | ○ |
| Example 5 | A3 | 330 | 60 | C1 | 40 | 40 | B1 | 0.6 | 3.7 | Non breakage | 4.5 | ○ |
| Example 6 | A3 | 330 | 60 | C1 | 40 | 40 | B1 | 2 | 10 | Non breakage | 3.6 | ○ |
| Example 7 | A3 | 330 | 60 | C1 | 40 | 40 | B2 | 0.6 | 2.7 | Non breakage | 4.6 | ○ |
| Example 8 | A3 | 330 | 60 | C1 | 40 | 40 | B3 | 2 | 6.4 | Non breakage | 5.1 | ○ |
| Example 9 | A3 | 330 | 60 | C2 | 5.4 | 40 | B1 | 2 | 14 | Non breakage | 4.8 | ○ |
| Example 10 | A3 | 330 | 60 | C3 | 0.05 | 40 | B1 | 2 | 2 | Non breakage | 5.1 | ○ |
| Example 11 | A3 | 330 | 60 | C7 | - | 40 | B1 | 2 | 98.4 | Non breakage | 3 | ○ |
| Example 12 | A3 | 330 | 55 | C1 | 40 | 45 | B1 | 2 | 17.6 | Non breakage | 3.8 | ○ |
| Example 13 | A5 | 100 | 100 | - | - | - | B1 | 2 | 8.0 | Non breakage | 2.9 | ○ |

(continued)

| | Ultra-high molecular weight polyethylene-based resin (A) | | Resin (C) (Polyolefin resin) | | | Compound (B) Compound (d) | | Fluidity (MFR) (g/10 min) | Impact strength (kJ/m²) | Abrasion amount (mg) | Extrusion moldability |
|---|---|---|---|---|---|---|---|---|---|---|---|
| | | Molecular weight (ten thousand) | Addition amount(parts by weight) | | MFR (g/10 min) | Addition amount (parts by weight) | | Addition amount(parts by weight) | | | | |
| Example 14 | A5 | 100 | 75 | C1 | 40 | 25 | B1 | 1 | 7.7 | Non breakage | 5.5 | ○ |
| Example 15 | A5 | 100 | 60 | C1 | 40 | 40 | B1 | 0.5 | 3.3 | Non breakage | 5.6 | ○ |
| Example 16 | A5 | 100 | 50 | C1 | 40 | 50 | B1 | 0.5 | 7.2 | Non breakage | 6.3 | ○ |
| Example 17 | A5 | 100 | 60 | C4 | 135 | 40 | B1 | 0.5 | 2.9 | Non breakage | 5.6 | ○ |
| Example 18 | A5 | 100 | 60 | C5 | - | 40 | B1 | 0.5 | 1.3 | Non breakage | 6 | ○ |
| Example 19 | A5 | 100 | 60 | C6 | - | 40 | B1 | 0.5 | 3.4 | Non breakage | 6 | ○ |
| Example 20 | A6 | 50 | 60 | C1 | 40 | 40 | B1 | 1 | 8.1 | Non breakage | 5.9 | ○ |
| Comparative Example 1 | A1 | 590 | 25 | C1 | 40 | 75 | - | - | 22 | 14 | 11 | ○ |
| Comparative Example 2 | A2 | 450 | 75 | C1 | 40 | 25 | - | - | 0.04 | Non breakage | 3 | × |
| Comparative Example 3 | A2 | 450 | 60 | C1 | 40 | 40 | - | - | 0.7 | Non breakage | - | × |
| Comparative Example 4 | A2 | 450 | 50 | C1 | 40 | 50 | - | - | 1.4 | Non breakage | - | × |
| Comparative Example 5 | A2 | 450 | 30 | C1 | 40 | 70 | - | - | 17 | 12 | 14.9 | ○ |
| Comparative Example 6 | A3 | 330 | 75 | C1 | 40 | 25 | - | - | 0.08 | Non breakage | 3.9 | × |

EP 3 425 000 A1

13

(continued)

| | Ultra-high molecular weight polyethylene-based resin (A) | | | Resin (C) (Polyolefin resin) | | | Compound (B) Compound (d) | | Fluidity (MFR) (g/ 10 min) | Impact strength (kJ/m²) | Abrasion amount (mg) | Extrusion moldability |
|---|---|---|---|---|---|---|---|---|---|---|---|---|
| | | Molecular weight (ten thousand) | Addition amount (parts by weight) | | MFR (g/10 min) | Addition amount (parts by weight) | | Addition amount (parts by weight) | | | | |
| Comparative Example 7 | A3 | 330 | 60 | C1 | 40 | 40 | - | - | 1.5 | Non breakage | 4.2 | × |
| Comparative Example 8 | A4 | 200 | 75 | C1 | 40 | 25 | - | - | 0.18 | Non breakage | - | × |
| Comparative Example 9 | A5 | 100 | 100 | - | - | - | - | - | 0.12 | Non breakage | 3.3 | × |
| Comparative Example 10 | A5 | 100 | 75 | C1 | 40 | 25 | - | - | 0.82 | Non breakage | - | × |
| Comparative Example 11 | A3 | 330 | 60 | C1 | 40 | 40 | d1 | 2 | 0.89 | Non breakage | - | × |
| Comparative Example 12 | A3 | 330 | 60 | C1 | 40 | 40 | d2 | 2 | 0.9 | Non breakage | - | × |
| Comparative Example 13 | A3 | 330 | 60 | C1 | 40 | 40 | d3 | 2 | 0.64 | Non breakage | - | × |
| Comparative Example 14 | A3 | 330 | 60 | C1 | 40 | 40 | d4 | 2 | 0.69 | Non breakage | - | × |

As is apparent from Table 1, the resin composition of the present invention may be molded by the method similar to that for general-purpose polyethylene without impairing the excellent characteristics (impact resistance and an abrasion resistance) derived from the ultra-high molecular weight polyethylene-based resin, and the practicability thereof is significantly large.

[Example 21]

60 parts by weight of the ultra-high molecular weight polyethylene-based resin (A3) serving as the ultra-high molecular weight polyethylene-based resin (A), 40 parts by weight of the polyethylene resin (C1) serving as the resin (C), 2 parts by weight of the alcohol ester (B1) of a condensed hydroxy fatty acid serving as the compound (B), and 0.2 part by weight of erucamide (manufactured by Kao Corporation, product name: "Fatty Acid Amide E") serving as a fluidity modifier (E1) were melted and kneaded with a twin-screw extruder (manufactured by Toshiba Machine Co., Ltd., product name: "TEM26SS") to obtain a resin composition. The obtained resin composition was subjected to the above-mentioned evaluations (1) and (2). The results are shown in Table 2.

[Example 22]

A resin composition was obtained in the same manner as in Example 21 except that: 60 parts by weight of the ultra-high molecular weight polyethylene-based resin (A5) was used in place of 60 parts by weight of the ultra-high molecular weight polyethylene-based resin (A3); and the blending amount of the alcohol ester (B1) was set to 0.5 part by weight. The obtained resin composition was subjected to the above-mentioned evaluations (1) and (2). The results are shown in Table 2.

[Table 2]

| | | Ultra-high molecular weight polyethylene-based resin (A) | | | Resin (C) (Polyolefin resin) | | | Compound (B) Compound (d) | | Compound (E) | | Fluidity (MFR) (g/10 min) | Extrusion moldability |
|---|---|---|---|---|---|---|---|---|---|---|---|---|---|
| | | Molecular weight (ten thousand) | Addition amount (parts by weight) | | (MFR) (g/10 min) | Addition amount (parts by weight) | | Addition amount (parts by weight) | | Addition amount (parts by weight) | | | |
| Example 21 | A3 | 330 | 60 | C1 | 40 | 40 | B1 | 2 | E1 | 0.2 | | 14 | ○ |
| Example 22 | A5 | 100 | 60 | C1 | 40 | 40 | B1 | 0.5 | E1 | 0.2 | | 4 | ○ |

16

As is apparent from Table 2, the resin composition of the present invention is further enhanced in fluidity through addition of the fluidity modifier.

[Molded Article Manufacturing Example 1: Sheet]

A sheet having a thickness of 300 $\mu$m was molded from the resin composition obtained in Example 6 serving as a raw material by film molding using a T-die through use of a 40 mm$\varphi$ single-screw extruder (manufactured by GSI Creos Corporation, product name: "691C-EF049") under the conditions of a die width of 300 mm, a lip clearance of 0.5 mm, and a processing temperature of 250°C.
The sheet obtained from the resin composition of the present invention is excellent in abrasion resistance, sliding property, and impact resistance.

[Molded Article Manufacturing Example 2: Film]

A film having a thickness of 50 $\mu$m was molded from the resin composition obtained in Example 15 serving as a raw material under the conditions of a die width of 300 mm, a lip clearance of 0.3 mm, and a processing temperature of 250°C through use of the same facility as that of Molded Article Manufacturing Example 1.
The film obtained from the resin composition of the present invention is excellent in that a thin film can be molded while performance, such as abrasion resistance, a sliding property, and impact resistance, is maintained, and hence the range of product design is significantly enlarged.

[Molded Article Manufacturing Example 3: Pressure-sensitive Adhesive Tape]

A pressure-sensitive adhesive tape was manufactured by a method involving: subjecting a base material molded in Molded Article Manufacturing Example 1 or 2 to corona treatment; applying a pressure-sensitive adhesive composition solution to the base material by a direct application method; and drying the pressure-sensitive adhesive composition solution. The application method is not particularly limited, and there may be adopted, for example, a roll coating method, such as reverse coating or gravure coating, a spin coating method, a screen coating method, a fountain coating method, a dipping method, and a spray method.
The pressure-sensitive adhesive tape obtained from the resin composition of the present invention has excellent performance, such as abrasion resistance, a sliding property, and impact resistance.

[Molded Article Manufacturing Example 4: Bag for Protection]

A film was formed from the resin composition obtained in Example 11 serving as a raw material by a single layer molding method or a multi-layer film molding method with another resin, and a bag for frozen storage (bag for protection) was manufactured by a method such as thermal fusion through use of the formed film.
The bag for frozen storage (bag for protection) obtained from the resin composition of the present invention is excellent in that a sliding property, abrasion resistance, impact resistance, cold and impact resistance, and chemical resistance are maintained, and the bag is useful as a frozen storage bag for a living tissue and a food storage bag.

[Molded Article Manufacturing Example 5: Protective Material for Truck Cargo Bed]

A protective material for a truck cargo bed was manufactured by: molding drainboard-shaped parts from the resin composition obtained in Example 1 serving as a raw material by a profile extrusion molding method; and assembling the parts.
The protective material obtained from the resin composition of the present invention protects a cargo bed of a truck or the like from cargo and simultaneously enables the cargo to slide easily, and hence the protective material is also excellent in efficiency for transportation operation.

[Molded Article Manufacturing Example 6: Conveyance Tray]

A conveyance tray was manufactured by: molding sheets having a thickness of 1 mm and a thickness of 2 mm from the resin composition obtained in Example 1 serving as a raw material by the same method as that for Molded Article Manufacturing Example 1; and subjecting the sheets to vacuum molding at a molding temperature of from 300 °C to 350°C.
The conveyance tray obtained from the resin composition of the present invention is excellent in abrasion resistance, sliding property, and impact resistance, and the resin composition can increase the lifetime of a product.

[Molded Article Manufacturing Example 7: Foamed Molded Article]

A plate-shaped molded article was manufactured from the resin composition obtained in Example 11 serving as a raw material by a profile extrusion molding method through addition of a chemical foaming agent. A skin layer portion having a surface that was not foamed maintained an abrasion resistance and a sliding property, while a center layer was foamed, with the result that the molded article was reduced in weight.

[Molded Article Manufacturing Example 8: Hollow Tray]

A hollow tray was manufactured from the resin composition obtained in Example 11 serving as a raw material by a blow molding method.
The conveyance tray obtained from the resin composition of the present invention is excellent in abrasion resistance, sliding property, and impact resistance, and the resin composition is excellent in increase in lifetime and reduction in weight of a product.

Industrial Applicability

The resin composition of the present invention may be suitably used as materials for various molded articles, such as a container, a freezing bag, a blow-molded bottle, a tray, a packaging material, a tape, and a lid member.

**Claims**

1. A resin composition, comprising:

   an ultra-high molecular weight polyethylene-based resin (A) having a viscosity-average molecular weight of 300,000 or more; and
   a condensed hydroxy fatty acid and/or an alcohol ester of the condensed hydroxy fatty acid (B).

2. The resin composition according to claim 1, wherein the ultra-high molecular weight polyethylene-based resin (A) has a viscosity-average molecular weight of from 300,000 to 15,000,000.

3. The resin composition according to claim 1 or 2, further comprising a resin (C) other than the ultra-high molecular weight polyethylene-based resin (A),
   wherein the resin (C) comprises an olefin-based resin.

4. The resin composition according to any one of claims 1 to 3, wherein a content of the condensed hydroxy fatty acid and/or the alcohol ester of the condensed hydroxy fatty acid (B) is from 0.1 part by weight to 30 parts by weight with respect to 100 parts by weight of the resins in the resin composition.

5. The resin composition according to any one of claims 1 to 4, wherein the condensed hydroxy fatty acid has a condensation degree of 2 or more.

6. The resin composition according to any one of claims 1 to 4, wherein the alcohol ester of the condensed hydroxy fatty acid comprises a reaction product of a condensed hydroxy fatty acid having a condensation degree of 2 or more and an alcohol.

7. The resin composition according to any one of claims 2 to 6, wherein a content of the resin (C) is more than 0 parts by weight and 80 parts by weight or less with respect to 100 parts by weight of the resins in the resin composition.

8. A molded article, which is formed through use of the resin composition of any one of claims 1 to 7.

## INTERNATIONAL SEARCH REPORT

| International application No. |
|---|
| PCT/JP2017/007034 |

### A. CLASSIFICATION OF SUBJECT MATTER

*C08L23/06*(2006.01)i, *C08K5/09*(2006.01)i, *C08K5/101*(2006.01)i, *C08L23/02* (2006.01)i, *C08L67/04*(2006.01)i

According to International Patent Classification (IPC) or to both national classification and IPC

### B. FIELDS SEARCHED

Minimum documentation searched (classification system followed by classification symbols)
C08L23/06, C08K5/09, C08K5/101, C08L23/02, C08L67/04

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 10-17703 A (Taiyo Kagaku Co., Ltd.),<br>20 January 1998 (20.01.1998),<br>claim 1; paragraphs [0003], [0006] to [0012];<br>examples 7 to 12<br>(Family: none) | 1-8<br>1-8 |
| Y | JP 2015-134902 A (Asahi Kasei Chemicals Corp.),<br>27 July 2015 (27.07.2015),<br>claims 1 to 4; paragraphs [0006], [0007],<br>[0022], [0071], [0135]; examples<br>(Family: none) | 1-8 |
| Y | JP 2015-140369 A (Tosoh Corp.),<br>03 August 2015 (03.08.2015),<br>claim 1; paragraphs [0008], [0044] to [0045];<br>examples<br>(Family: none) | 1-8 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 May 2017 (11.05.17) | 23 May 2017 (23.05.17) |

| Name and mailing address of the ISA/<br>Japan Patent Office<br>3-4-3,Kasumigaseki,Chiyoda-ku,<br>Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2017/007034

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2001-1450 A (Mitsui Chemicals, Inc.),<br>09 January 2001 (09.01.2001),<br>claims 1, 5; paragraphs [0007], [0054], [0075];<br>examples 1 to 6<br>& US 6706385 B1 & EP 1063084 A2<br>claims 1, 5; paragraphs [0007], [0066], [0093];<br>examples 1 to 6<br>& DE 60029053 D & TW 527280 B<br>& KR 10-2001-0007461 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4324525 B
- JP 57193319 A
- JP 57177036 A